# EUROPÄISCHE PATENTSCHRIFT

(11) **EP 0 777 699 B1**
(45) Veröffentlichungstag und Bekanntmachung des Hinweises auf die Patenterteilung: **20.10.1999**
(21) Anmeldenummer: 95931213.3
(22) Anmeldetag: 28.08.1995
(51) Int. Cl.: C08L 21/00

(54) **BIOLOGISCH ABBAUBARER WERKSTOFF AUS NACHWACHSENDEN ROHSTOFFEN UND VERFAHREN ZU SEINER HERSTELLUNG**
BIODEGRADABLE MATERIAL COMPRISING REGENERATIVE RAW MATERIAL AND METHOD OF PRODUCING THE SAME
MATERIAU BIODEGRADABLE A BASE DE MATIERES PREMIERES REGENEREES ET SON PROCEDE DE FABRICATION

(30) Priorität: 27.08.1994 DE 9413921 U
(43) Veröffentlichungstag der Anmeldung: 11.06.1997
(73) Patentinhaber: METRAPLAST H. Jung GmbH, 61130 Nidderau (DE)
(72) Erfinder: THOBOR, Michael, D-90765 Nürnberg (DE)
(74) Vertreter: Tergau, Enno, Dipl.-Ing.
(86) Internationale Anmeldenummer: EP9503388
(87) Internationale Veröffentlichungsnummer: WO9606886

(56) Entgegenhaltungen:
- WO-A-94/14886
- DE-A- 4 204 083
- FR-A- 2 697 259
- DATABASE WPI Week 9107 Derwent Publications Ltd., London, GB; AN 91-047334 & JP,A,02 311 544 (NOK CORP.) , 27.Dezember 1990
- CAOUTCHOUCS ET PLASTIQUES, Bd. 68, Nr. 706, 1991 Seiten 71-76, VERT M. 'Biodegradables, réalités et perspectives.'
- RUBBER JOURNAL , Oktober 1971 USA, Seiten 28-35, R. A. BUCHANAN ET AL. 'Powdered elastomers from starch-encased latex particles'

## Beschreibung

Die Erfindung betrifft einen biologisch abbaubaren Werkstoff und ein Verfahren zu dessen Herstellung. Unter biologisch abbaubaren Werkstoffen sind solche Werkstoffe zu verstehen, die unter dem Einfluß von Umwelteinflüssen und der Tätigkeit von Destruenten zersetzt werden. Es sind bereits biologisch abbaubare Werkstoffe bekannt, bei denen Erbsen als Grundmaterial verwendet werden. Weiterhin ist es bekannt, in konventionelle Polymere Stärke einzuarbeiten, um dadurch eine teilweise Zersetzbarkeit zu erreichen. Bei solchen stärkegefüllten Kunststoffen wird jedoch nur der eingelagerte Stärkeanteil abgebaut, wodurch die Kunststoffmatrix in sehr viele kleine Teile zerfällt.

Ziel der Erfindung ist es, einen Werkstoff vorzuschlagen, der vollständig biologisch abbaubar ist und der geeignet ist, zur Bildung von Verbundwerkstoffen punkt- oder faserförmige Partikel als Füllstoffe in sich aufzunehmen.

Diese Aufgabe wird durch die in den Ansprüchen 1 bis 5 vorgeschlagenen Grundzusammensetzungen gelöst. Alle diese Werkstoffe enthalten 5-50 Gew.% Kautschuk und 4-25 Gew.% Stärke. Diesen Grundbestandteilen, nämlich Kautschuk und Stärke ist ein dritter Bestandteil mit einem Anteil von 10 bis 50 % zugemengt. Bei diesem Bestandteil handelt es sich entweder um Polybetahydroxybutyrat oder um Zelullosepulver. Der erstgenannte Stoff wird durch Polymerisation von Betahydroxybuttersäure gewonnen. Er ist auch unter der Bezeichnung "Biopol" (Fa. Zeneca) im Handel erhältlich.

Wesentlicher Bestandteil der erfindungsgemäßen Werkstoffe ist Kautschuk. Vorzugsweise wird zwar Naturkautschuk eingesetzt, weil dieser vollständig biologisch abbaubar ist. Es können aber auch Kunstkautschuke eingesetzt werden, die je nach Art der verwendeten Additive zumindest teilweise oder nach längerer Lagerung unter Abbaubedingungen abbaubar sind. Das Stärkepulver sowie die dritte im wesentlichen ebenfalls pulverförmige Komponente sind in der Grundmasse Kautschuk homogen verteilt und zumindest mit bloßem Auge nicht mehr erkennbar. Der erfindungsgemäße Werkstoff gemäß den Ansprüchen 1 und 2 weist je nach Kautschukanteil eine mehr oder weniger große Elastizität auf. Er eignet sich daher mehr zur Herstellung von Formteilen, bei denen es weniger auf Festigkeit und Stabilität, sondern auf elastische Eigenschaften ankommt.

Bei Verbundwerkstoffen kommt es darauf an, daß zwischen den eingelagerten Teilchen, etwa punkt- oder faserförmigen Partikeln und dem Matrixwerkstoff, eine ausreichende Haftung vorhanden ist. Die mechanischen Eigenschaften werden nämlich entscheidend durch die Qualität der Grenzflächen zwischen Partikeln und Matrix bestimmt. Es hat sich nun gezeigt, daß der Werkstoff gemäß den Ansprüchen 1 und 2 relativ große Mengen an Füll- bzw. Verstärkungsstoffen nach Art eines GFK-Kunststoffes (= glasfaserverstärkter Kunststoff) aufnehmen kann. Erfindungsgemäß werden als Verstärkungs-Einlagerungen granulat- oder faserförmige Stoffe aus nachwachsenden Rohstoffen verwendet. Solche Rohstoffe sind etwa zerkleinerte Getreidekörner oder Pflanzenfasern. Die dadurch erhaltenen Werkstoffe zeichnen sich durch eine größere Härte und Festigkeit gegenüber dem Werkstoff gemäß Anspruch 1 und 2 aus. Sie eignen sich daher zur Herstellung von größeren und insbesondere auch flächigen Formteilen, etwa für Teile für die Innenverkleidung von Kraftfahrzeugen. Den erfindungsgemäßen Werkstoffen können Hilfsstoffe bis maximal etwa 15 % zugesetzt sein. Darunter sind Stoffe zu verstehen, die die Werkstoffe modifizieren, ohne ihre mechanischen Eigenschaften wesentlich zu beeinflussen. Solche Stoffe sind beispielsweise Fließmittel (etwa Stearin), um die Plastifizierung der Ausgangsstoffe in Spritzgießmaschinen oder Extrudern (s. weiter unten) zu verbessern. Es kann sich auch um Farbstoffe oder um Fraßschutzstoffe handeln.

Ein weiteres Ziel der Erfindung ist es, ein Verfahren zur Herstellung der erfindungsgemäßen Werkstoffe vorzuschlagen. Kautschuk (in unvernetzter Form) ist bekanntlich eine relativ zähklebrige, "gummiähnliche" Masse, in die sich nur schlecht pulver- oder granulafförmige Stoffe einarbeiten lassen. Dies trifft sowohl für Kunst- als auch für Naturkautschuk zu. Letzterer liegt in der Regel in Form von sogenannten Fellen vor, die bereits im Erzeugerland aus dem Latex der Kautschukpflanzen durch Abdampfen des Wasseranteils gewonnen werden. Das Einarbeiten eines Pulvers wie Stärke oder Zellulose oder von grobkörnigeren Partikeln in eine solche Kautschukmasse wäre allenfalls mit sehr leistungsfähigen Schneide- und Knetmaschinen unter hohem Energieaufwand möglich. Erfindungsgemäß wird nun vorgeschlagen, den Kautschuk in Form von Flocken oder Granulat einzusetzen. Er läßt sich dann mit den weiteren Bestandteilen sehr leicht in einfachen Mischern innig vermischen. Kautschuk in flocken - oder granulatform ist im Handel erhältlich. In einem nächsten Verfahrensschritt wird die so erhaltene Ausgangsmischung unter Erhitzung in einem üblichen Schneckenextruder oder einer üblichen Spritzgußmaschine plastifiziert. Bei dieser Behandlung werden die Kautschukflocken bzw. -körner bis auf Erweichungstemperatur erhitzt. Durch die Einwirkung der Schnecke sowohl eines Extruders als auch einer Spritzgußmaschine werden die einzelnen Bestandteile der Ausgangsmischung intensiv durchmischt. Der zähklebrige Kautschuk neigt üblicherweise dazu, sich an der Schnecke und an den Innenwänden des Schneckenraums der genannten Maschinen festzusetzen. Dieser Effekt läuft einer innigen Durchmischung der Bestandteile zuwider. Er führt auch zu einer erhöhten Reibung und dadurch zu einer Temperaturerhöhung der zu verarbeitenden Masse. Die Temperaturerhöhung führt zu unerwünschten Veränderungen, insbesondere Verhärtungen des Kautschuks. Wenn jedoch erfindungsgemäß Kautschukflocken oder Kautschukgranulat in Mischung mit den genannten Bestandteilen im Extruder oder der Spritzgußmaschine bearbeitet werden, tritt dieser Effekt nicht auf. Ein Verkleben des Kautschuks an der Schnecke und an Maschineninnenwänden ist wirkungsvoll dadurch verhindert, daß die einzelnen Kautschukteilchen zumindest im Anfangsstadium der Plastifizierung im Schneckenraum von einer pulvrigen Hülle umgeben sind. Im weiteren Verlauf der Bearbeitung verbinden sich die einzelnen Kautschukteilchen zu einer homogenen Grundmasse, in der die Zusatzstoffe gleichmäßig verteilt sind. Das Ergebnis der Bearbeitung im Schneckenraum der genannten Maschinen ist somit eine plastifizierte, extrudier und spritzfähige Masse. Als nächster Verfahrensschritt wird diese Masse entweder als Strang extrudiert oder in eine Form gespritzt. Im ersteren Fall wird der extrudierte Werkstoffstrang zerkleinert, also granuliert. Der erfindungsgemäße Werkstoff liegt dann als Granulat vor, das praktisch beliebig lange zwischengelagert und zur Herstellung von Spritzgießteilen verwendet werden kann. Im zuletzt genannten Fall wird der erfindungsgemäße Werkstoff direkt in eine Form eingespritzt und das gewünschte Formteil auf direktem Weg erhalten.

Als vorteilhaft hat es sich erwiesen, wenn bei der Plastifizierung der Ausgangsmasse im Schneckenraum eine Temperatur von 170°C bis 180°C eingehalten wird. Bei unter 170°C liegenden Temperatur kann keine aureichende Erweichung des Kautschuks und damit eine zufriedenstellende Einarbeitung der Zuschlagstoffe erreicht werden. Es dürften hier aber auch andere Temperatureffekte noch eine Rolle spielen. Insbesondere erfahren die zugesetzten Naturstoffe bei den vorherrschenden Temperaturen eine nicht unwesentliche Veränderung und Umwandlung, die für die Eigenschaften des Werkstoffes eine nicht unwesentliche Rolle spielen dürften. Aus diesem Gunde können die Temperatur nicht wesentlich über 180°C gesteigert werden. Die überwiegend aus Stärke, Zellulose und Eiweißen bestehenden Naturstoffe werden bei den höheren Temperaturen zum Teil soweit verändert, daß der erhaltene Werkstoff nicht mehr die gewünschten Eigenschaften aufweist. Insbesondere können kohlenstoffhaltige Bestandteile wie Zellulose oder Stärke verbrennen bzw. verkohlen. Der erfindungsgemäße Werkstoff ist in der Lage, Füllstoffe bis zu einem Anteil von 65 % aufzunehmen. Dadurch kann ein weites Spektrum von Verbundwerkstoffen mit den unterschiedlichsten Festigkeits- und Härteabstufungen hergestellt werden.

Mit den erfindungsgemäßen Verbundwerkstoffen wurden Spritzgußteile, wie etwa Becher, Platten, Schalen und Teile für die Innenverkleidung von Kraftfahzeugen hergestellt. Die hergestellten Körper wurden in Augenschein genommen und auf ihre Eignung geprüft. Es wurden auch Probekörper hergestellt, um damit, wie weiter unten noch erläutert wird, verschiedene mechanische Kenndaten zu ermitteln. Aus all diesen Versuchen ergab sich, daß Werkstoffe mit besonders vorteilhaften Eigenschaften erhalten werden können, wenn die folgende Zusammensetzung eingehalten wird (Gew.%):

| | |
|---|---|
| Kautschuk | 10 bis 30 % |
| Kartoffelstärke | 5 bis 15 % |
| Polybetahydroxybutyrat/Zellulose | 20 bis 30 % |
| Füllstoffe | 20 bis 60 % |
| Hilfsstoffe | max. 10 % |

Als Füllstoffe für Verbundwerkstoffe können Granulate und Fasern der unterschiedlichsten Pflanzen eingesetzt werden. Insbesondere sind Granulate von Getreidesamen wie etwa Mais, Roggen und Weizen zu nennen. Als Faserstoffe kommen etwa die Fasern aus Chinagras oder aus den Kapselfrüchten des Kapok-Baumes in Frage. Es können auch Holzfasern oder Baumwollfasern verwendet werden.

Wenn der Anteil der Füllstoffe 60 % überschreitet, wird der Werkstoff zusehends spröde. Die Grundmatrix aus Kautschuk, Kartoffelstärke und Polybetahydroxybutyrat (im folgenden PBHB genannt) bzw. Zellulose ist dann nicht mehr in der Lage, die Einlagerungsteilchen zusammenzuhalten, ihre Aufnahmefähigkeit ist quasi überschritten. Eine Versprödung des Materials tritt auch ein, wenn der Kautschukanteil unter 10 % absinkt. Bei Kautschukgehalten von mehr als 30 % wird der Werkstoff zunehmend elastischer und verliert mehr und mehr die Eigenschaften eines Verbundwerkstoffes, nämlich Härte und Festigkeit. Bei einem Gehalt an Füllstoffen von mehr als etwa 60 % ist eine Verschlechterung der mechanischen Eigenschaften beobachtbar. Insbesondere nimmt die Zugfestigkeit ab. Die Zuschlagsstoffe aus nachwachsenden Rohstoffen sind naturgemäß hydrophil, d.h. sie nehmen Wasser auf. Wenn der Anteil der Einlagerungen aus nachwachsenden Rohstoffen mehr als 60 % aufweist, erreicht das Quellvermögen des Werkstoffes ein nicht mehr tolerierbares Ausmaß. Bei hohen Partikelanteilen ist außerdem die gleichmäßige Verteilung während der Plastifizierung erschwert. Hilfsstoffe wie Zitronensäure als Fraßschutz (hält Nager wie Mäuse und Ratten ab) oder Stearin als Fließmittel sollten insgesamt auf 10 % beschränkt bleiben, um eine negative Beeinflussung der mechanischen Eigenschaften weitgehend auszuschließen.

Der Vorteil der Verwendung von gepufften Getreidekörnern, etwa Popcorn liegt darin, daß dadurch Werkstoffe mit einer geringeren Dichte erhalten werden können. Durch die Lufteinschlüsse in diesen Materialien wird außerdem die Wärmeisolationsfähigkeit der Werkstoffe erhöht.

Die Erfindung wird nun anhand von Beispielen näher erläutert:

### Beispiel 1:

| | |
|---|---|
| Naturkautschukflocken | 26 % |
| Kartoffelstärke | 6 % |
| Popcorn | 13 % |
| Roggen | 26 % |
| PBHB | 26 % |
| Zitronensäure | 4 % |

### Beispiel 2:

| | |
|---|---|
| Naturkautschukflocken | 19 % |
| Kartoffelstärke | 12 % |
| Hafer | 19 % |
| Popcorn | 12 % |
| Dammar-Harz | 12 % |
| PBHB | 19 % |
| Zitronensäure | 3 % |
| Stearin | 2 % |
| Gelatinepulver | 2 % |

### Beispiel 3:

| | |
|---|---|
| Naturkautschukflocken | 13 % |
| Kartoffelstärke | 13 % |
| Hafer | 13 % |
| Roggen | 26 % |
| PBHB | 20 % |
| Stearin | 3 % |
| Zitronensäure | 3 % |
| Gelatinepulver | 2 % |
| Popcorn | 7 % |

Den Zusammensetzungen gemäß den Beispielen 1 bis 3 wurde Stearin als Fließmittel zugesetzt. Die "Grundmatrix" besteht bei diesen Zusammensetzungen aus Kautschuk, Kartoffelstärke und PBHB. In den obigen und auch weiter unten genannten Beispielen wurde Kartoffelstärke als Grundbestandteil der Grundmatrix, insbesondere aus Kostengründen verwendet. Es können aber auch andere Stärkearten wie Reis-, Mais- oder Getreidestärken eingesetzt werden.

Zur Herstellung eines erfindungsgemäßen Werkstoffes wurde wie folgt vorgegangen:

Der Flocken- oder Granulatkautschuk wurde mit den restlichen Bestandteilen in einem üblichen Mischer innig vermischt. Zumindest die Kartoffelstärke liegt dabei als feines Pulver bzw. Mehl vor, während die Füllstoffe, also Popcorn, Roggen und Hafer in granulierter Form vorliegen. Nach der Mischung sind die Latex-Flocken in den übrigen Bestandteilen gleichmäßig verteilt bzw. umgekehrt. Die so vorbereitete Ausgangsmischung wurde nun in einer 75-Tonnen-Spritzgußmaschine plastifiziert. Sie wurde dazu in den Einfülltrichter der Maschine eingefüllt, wodurch sie in den Schneckenraum der Maschine gelangt. Die Maschine wurde so beheizt, daß die sich im Schneckenraum befindliche Masse eine Temperatur von 170°C bis 180°C aufweist. In diesem Temperaturbereich erweicht der Kautschuk. Durch die Rotation der Schnecke werden die Füll- und Hilfsstoffe in die Kautschukmatrix eingearbeitet. Bei der vorherrschenden Temperatur verändern sich auch die zugesetzten Naturstoffe. Untersuchungen hierüber wurden jedoch nicht angestellt. Es wird aber vermutet, daß die Temperatureinwirkung im Schneckenraum auf die Naturstoffe nicht unwesentlich ist für die Eigenschaften des späteren Werkstoffes. Das Festsetzen der naturgemäß zumindest im erwärmten Zustand klebrigen Kautschukfloken an der Schnecke oder den Innenwänden des Schneckenraumes ist dadurch verhindert, daß die Kautschukflocken mit Stärkepulver oder anderen pulverförmigen Bestandteilen umhüllt sind. Die Plastifizierung der Masse im Schneckenraum ist spätestens nach etwa 1 Minute abgeschlossen.

Mit der plastifizierten Masse wurden verschiedene Formteile wie Becher, Schalen und Probekörber gespritzt. Die Probekörper wurden für die im folgenden beschriebenen Versuche zur Bestimmung von mechanischen Kenndaten verwendet. Im folgenden sind mit Z1, Z2 und Z3 die Zusammensetzungen gemäß Beispiel 1 bis 3 bezeichnet.

### Biegeversuch nach DIN 53452:

**Tabelle 1:**

| Biegefestigkeit (N/mm²) | | | |
|---|---|---|---|
| Proben-Nr. | Z 1 | Z 2 | Z 3 |
| 1 | 23,38 | 22,22 | 40,42 |
| 2 | 25,09 | 21,17 | 43,17 |
| 3 | 23,39 | 21,55 | 37,36 |
| 4 | 23,86 | 19,43 | 41,29 |
| 5 | 20,91 | 19,54 | 38,62 |
| mittlere Biegefestigkeit | 23,33 | 20,78 | 40,17 |

**Tabelle 2:**

| Dehnung bei Höchstkraft (%) | | | |
|---|---|---|---|
| Proben-Nr. | Z 1 | Z 2 | Z 3 |
| 1 | 2,35 | 3,14 | 3,21 |
| 2 | 3,00 | 2,36 | 3,14 |
| 3 | 2,47 | 2,57 | 2,86 |
| 4 | 2,23 | 2,71 | 3,08 |
| 5 | 1,68 | 2,28 | 3,05 |
| mittlere Dehnung bei Höchstkraft | 2,35 | 2,61 | 3,07 |

Für die Durchführung der Biegeversuche gemäß Tabelle 1 und 2 wurden Probekörper mit einem rechteckigen durchschnittlichen Querschnitt von 4,16 mm x 9,89 mm verwendet. Die Prüfgeschwindigkeit betrug 2 mm/min.

### Bestimmung des Elastizitätsmoduls im Biegeversuch nach DIN 53457:

Es wurden Probekörper mit einer mittleren Dicke von 4,1 mm und einer Breite von durchschnittlich 9,9 mm getestet.

**Tabelle 3:**

| Elastizitätsmodul (N/mm²) | | | |
|---|---|---|---|
| Proben-Nr. | Z 1 | Z 2 | Z 3 |
| 1 | 1821,2 | 1270,1 | 1749,9 |
| 2 | 1707,3 | 1472,5 | 1844,7 |
| 3 | 1725,0 | 1177,3 | 1881,4 |
| mittlerer E-Modul | 1751,2 | 1306,6 | 1825,3 |

### Bestimmung des Längenausdehnungskoeffizienten:

Aus Z1 und Z2 wurden Probekörper mit einer Abmessung von 15 x 10,5 x 117 mm gespritzt. Die Längenausdehnung wurde bei einer Heizgeschwindigkeit von 120 K/h bestimmt. Alle drei Proben zeigen bis etwa 80°C einen verhältnismäßig konstanten Verlauf der Ausdehnung. Der Ausdehnungskoeffizient a dieses konstanten Bereiches ist in Tabelle 4 angegeben.

**Tabelle 4:**

| Ausdehungskoeffizient [10-5K-1]: | | | |
|---|---|---|---|
| | Z 1 | Z 2 | Z 3 |
| | 12,5 | 13,9 | 12 |

### Bestimmung des Schmelzindex nach DIN 53735:

Dieser Versuch wurde nur mit Material der Zusammensetzung nach Beispiel 1 (Z1) durchgeführt. Die Prüftemperatur betrug 190°C. Zur Bestimmung des Schmelzindex werden kleine Stücke einer Probemasse in einen Prüfzylinder gegeben und erhitzt. Der Prüfzylinder weist an seiner Unterseite eine Düse auf, aus der die erweichte Masse durch einen in den Prüfzylinder eingesetzten Druckstempel (Belastung 2,61 kp) als Strang ausgedrückt wird. Als Ergebnis konnte ein MFI (Melt Flow Index) von 2,59 g/10 min ermittelt werden.

### Bestimmung des Brennverhaltens nach DIN 75200:

Die Bestimmung des Brennverhaltens wird insbesondere bei Werkstoffen für Kraftfahrzeuginnenausstattungen gefordert. Es wurden Platten im Spritzgußverfahren hergestellt und über einen Zeitraum von 48 Stunden bei Normklima (23°C, 50 % rel. Luftfeuchtigkeit) gelagert. Die Platten wiesen eine Abmessung von 139 mm x 79 mm x 3 mm auf. Die Platten wurden an einem Rand entzündet und die Brennstrecke und die Brennzeit bestimmt. Von jeder Zusammensetzung (Z1 bis Z3) wurden 5 Proben untersucht. In der folgenden Tabelle sind die mittlere Brenngeschwindigkeit und die maximale Brenngeschwindigkeit der jeweils 5 Proben zusammengefaßt.

**Tabelle 5:**

| Brennverhalten (mittlere und max. Brenngeschwindigkeit in mm/min) | | | |
|---|---|---|---|
| | Z 1 | Z 2 | Z 3 |
| mittlere Brenngeschwindigkeit | 33,4 | 18,2 | 44,4 |
| maximale Brenngeschwindigkeit | 39,8 | 19,9 | 49,0 |

### Bestimmung der Dichte:

Zur Dichtebestimmung wurden spritzgegossene Platten von 2,9 mm x 79 mm x 139 mm mit einer Genauigkeit von 0,001 g gewogen. Die Platten wurden zur Bestimmung des Volumens vermessen und aus den Werten für die Volumina und den Massen die Dichte errechnet.

**Tabelle 6:**

| Dichte (g/cm³) | | | |
|---|---|---|---|
| | Z 1 | Z 2 | Z 3 |
| mittlere Dichte | 1,24 | 1,23 | 1,20 |

### Bestimmung des absoluten Feuchtigkeitsgehaltes nach DIN 52351:

Zur Bestimmung der relativen Feuchtigkeit wurden Platten der Zusammensetzungen Z1, Z2 und Z3 48 Stunden unter Normklimabedingungen (23°C, 50 % rel. Luftfeuchtigkeit) gelagert und danach ihre Gewichtszunahme gegenüber dem trockenen Zustand nach Lagerung in feuchter Luft und in Wasser bestimmt. Die Ergebnisse sind in der Tabelle 7 zusammengefaßt.

**Tabelle 7:**

| mittlerer absoluter Feuchtigkeitsgehalt (%) | | | |
|---|---|---|---|
| | Z 1 | Z 2 | Z 3 |
| mittlerer absoluter Feuchtigkeitsgehalt | 0,21 | 0,81 | 0,43 |

### Bestimmung der Wasseraufnahme und Quellung in Anlehnung an DIN 52351

Zur Bestimmung der Wasseraufnahme und der Quellung wurden Platten aus Werkstoffen mit einer Zusammensetzung Z1, Z2 und Z3 zunächst 48 Stunden lang in einem Normklima (23°C, 50% rel. Luftfeuchtigkeit) gelagert. Ein Teil der Proben wurde in feuchter Luft (95 % relative Luftfeuchtigkeit, 55° C) gelagert und nach 24, 48, 72 und 96 Stunden die mittlere Dicken- und Massenänderung als Prozentwert ermittelt.

**Tabelle 8:**

| Mittlere Dicken und mittlere Massenänderung (Dickenänderung Δd und Massenänderung Δm in %) bei Lagerung in feuchter Luft und in Wasser | | | | |
|---|---|---|---|---|
| Δ | | Z1 | Z2 | Z3 |
| Δd/Δm nach Luftlagerung | 24h | 0,00/0,61 | 1,54/1,25 | 0,96/0,86 |
| | 48h | 0,27/0,68 | 1,54/1,25 | 0,96/0,94 |
| | 72h | 0,83/0,68 | 1,54/1,25 | 0,96/94 |
| | 96h | -- | -- | -- |
| Δd/Δm nach Wasserlagerung | 24h | 11,24/2,14 | 15,85/3,76 | 2,25/0,96 |
| | 48h | 13,61/2,83 | 15,85/5,12 | 3,46/1,52 |
| | 72h | 14,87/3,56 | 16,69/6,35 | 3,46/1,86 |
| | 96 | 14,87/4,19 | 16,69/7,33 | 3,46/2,19 |

### Bestimmung von Spannung und Dehnung im Zugverzug nach DIN 53455:

Aus den Zusammensetzungen Z1-Z3 wurden Probestäbe mit einer mittleren Dicke von 4 mm und eine mittleren Breite von 10 mm (Normstab Nr. 3) hergestellt. Die Bestimmung der Zugfestigkeit und der Dehnung wurde einmal bei einer Prüfgeschwindigkeit von 5 mm/min und ein anderes Mal bei 50 mm/min durchgeführt. Die Dehnung wurde - in Abweichung von der DIN-Norm - aus der Abstandsänderung der Klemmenbacken bestimmt. Die Versuchsergebnisse sind in den Tabellen 9 und 10 zusammengefaßt.

**Tabelle 9:**

| Zugfestigkeit (N/mm²) | | | | | | |
|---|---|---|---|---|---|---|
| Proben-Nr. | Z1 | | Z2 | | Z3 | |
| | 5 mm/min | 50mm/min | 5mm/min | 50mm/min | 5mm/min | 50mm/min |
| 1 | 5,92 | 7,94 | 14,11 | 14,69 | 12,10 | 14,01 |
| 2 | 6,79 | 6,65 | 13,46 | 10,98 | 11,68 | 16,86 |
| 3 | 6,64 | 7,04 | 10,13 | 13,35 | 11,73 | 19,48 |
| 4 | 6,83 | 7,84 | 11,18 | 13,01 | 11,43 | 13,98 |
| 5 | 6,57 | 12,05 | 14,05 | 16,49 | 11,10 | 13,42 |
| mittlere Zugfestigkeit | 6,55 | 8,30 | 12,57 | 13,70 | 11,61 | 15,55 |

**Tabelle 10:**

| Dehnung bei Höchstkraft (%) | | | | | | |
|---|---|---|---|---|---|---|
| Proben-Nr. | Z1 | | Z2 | | Z3 | |
| | 5 mm/min | 50mm/min | 5 mm/min | 50mm/min | 5 mm/min | 50mm/min |
| 1 | 6,54 | 8,54 | 9,22 | 9,16 | 11,84 | 13,46 |
| 2 | 6,86 | 7,30 | 7,86 | 8,76 | 11,92 | 14,04 |
| 3 | 7,16 | 8,86 | 8,00 | 6,80 | 12,00 | 15,84 |
| 4 | 7,92 | 8,66 | 8,78 | 7,60 | 11,32 | 12,62 |
| 5 | 7,18 | 8,66 | 8,76 | 10,10 | 12,56 | 10,84 |
| mittlere Dehnung bei Höchstkraft | 7,13 | 8,44 | 8,52 | 8,48 | 11,93 | 13,36 |

Neben den oben beschriebenen Beispielen 1-3 wurden weitere Werkstoffe mit sehr unterschiedlichen Zusammensetzungen hergestellt und im Spritzgußverfahren verarbeitet. Es wurden daraus Schalen, Becher und plattenförmige Spritzgußteile hergestellt. Die Bestandteile und Gehaltsbereiche dieser Ausführungsbeispiele sind in Tabelle 11 zusammengestellt.

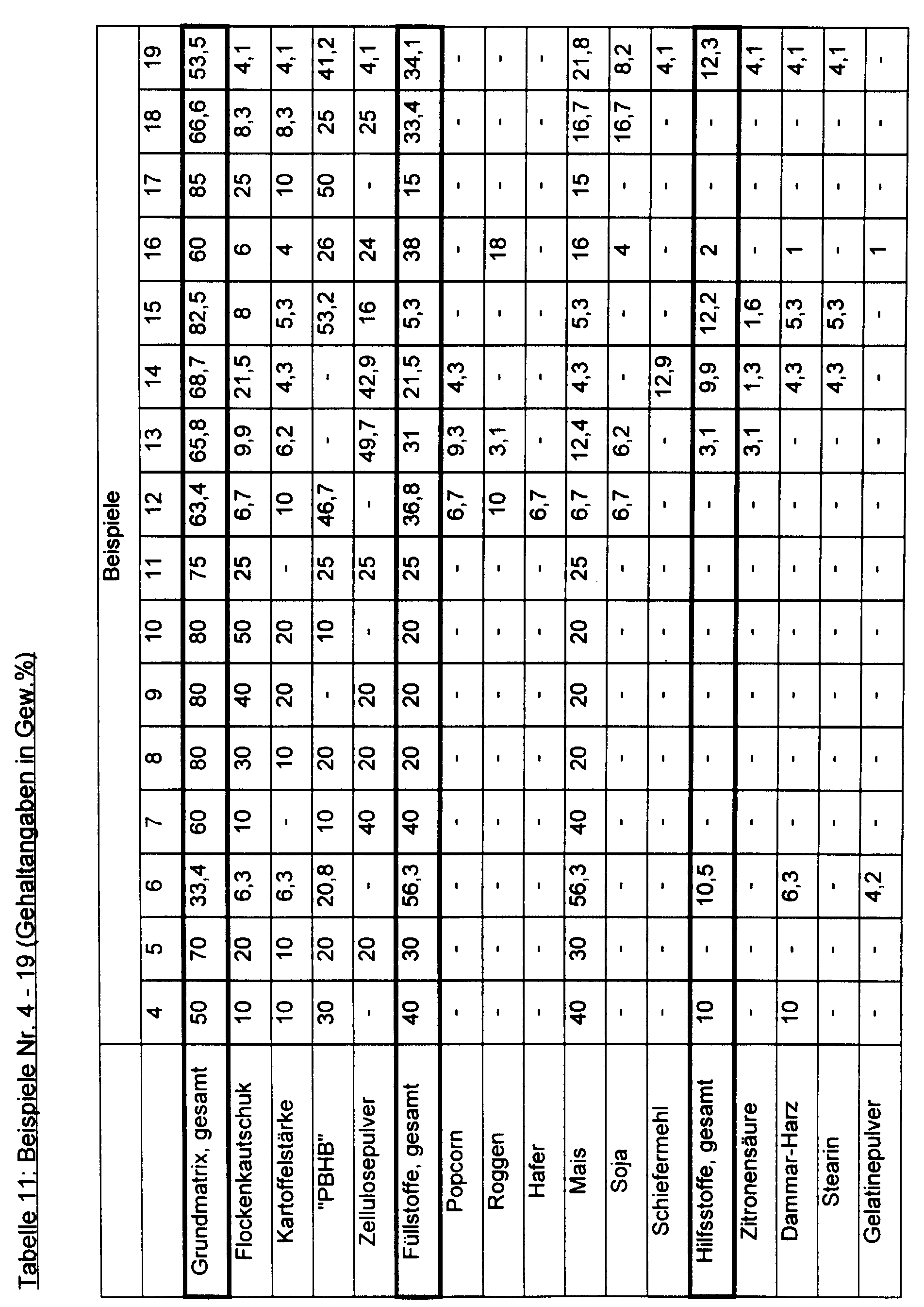

## Patentansprüche

1. Biologisch abbaubarer Werkstoff,
gekennzeichnet durch
folgende Zusammensetzung (Gew.%):
| | |
|---|---|
| Kautschuk | 5 bis 50 % |
| Stärkepulver | 4 bis 25 % |
| Polybetahydroxybutyrat | 10 bis 50 %. |
| Hilfsstoffe | 0 bis 15 % |

2. Biologisch abbaubarer Werkstoff
gekennzeichnet durch
folgende Zusammensetzung (Gew.%):
| | |
|---|---|
| Kautschuk | 5 bis 50 % |
| Stärkepulver | 4 bis 25 % |
| Zelullosepulver | 10 bis 50 % |
| Hilfsstoffe | 0 bis 15 % |

3. Biologisch abbaubarer Verbundwerkstoff mit einer thermoplastischen Matrix und darin eingelagerten Granulat- oder faserförmigen Füllstoffen aus nachwachsenden Rohstoffen,
dadurch gekennzeichnet,
daß sich die Matrix zusammensetzt aus
| | |
|---|---|
| Kautschuk | 5 bis 50 Gew.% |
| Stärkepulver | 4 bis 25 Gew.% |
| Polybetahydroxybutyrat | 10 bis 50 Gew.% |
| Hilfsstoffe | 0 bis 15 Gew.% |

4. Biologisch abbaubarer Verbundwerkstoff mit einer thermoplastischen Matrix und darin eingelagerten Granulat- oder faserförmigen Füllstoffen aus nachwachsenden Rohstoffen,
dadurch gekennzeichnet,
daß sich die Matrix zusammensetzt aus
| | |
|---|---|
| Kautschuk | 5 bis 50 Gew.% |
| Stärkepulver | 4 bis 25 Gew.% |
| Zellulosepulver | 10 bis 50 Gew.%. |
| Hilfsstoffe | 0 bis 15 Gew.% |

5. Biologisch abbaubarer Verbundwerkstoff mit einer thermoplastischen Matrix und darin eingelagerten Granulat- oder faserförmigen Füllstoffen aus nachwachsenden Rohstoffen,
dadurch gekennzeichnet,
daß sich die Matrix zusammensetzt aus
| | |
|---|---|
| Kautschuk | 5 bis 50 Gew.% |
| Stärkepulver | 4 bis 25 Gew.% |
| Mischung aus Polybetahydroxybutyrat und Zellulose | 10 bis 50 Gew.%. |
| Hilfsstoffe | 0 bis 15 Gew.% |

6. Werkstoff nach einem der Ansprüche 3, 4 oder 5,
dadurch gekennzeichnet,
daß der Anteil an Füllstoffen maximal 65 Gew.% beträgt.

7. Werkstoff nach Anspruch 6,
gekennzeichnet durch
folgende Zusammensetzung (Gew.%):
| | |
|---|---|
| Kautschuk | 10 bis 30% |
| Kartoffelstärke | 5 bis 15 % |
| Polybetahydroxybutyrat und/oder Zellulose | 20 bis 30 % |
| Füllstoffe | 25 bis 60 % |
| Hilfsstoffe | max. 10 % |

8. Werkstoff nach einem der Ansprüche 3 bis 7,
dadurch gekennzeichnet,
daß die Füllstoffe Getreidesamen oder Pflanzenfasern sind.

9. Werkstoff nach einem der Ansprüche 3 bis 8,
dadurch gekennzeichnet,
daß als Füllstoffe Granulate gepuffter Getreidekörner vorhanden sind.

10. Werkstoff nach einem der Ansprüche 1 bis 9,
dadurch gekennzeichnet,
daß der Kautschuk ein Naturkautschuk ist.

11. Werkstoff nach Anspruch 10,
gekennzeichnet durch
folgende Zusammensetzung (Gew.%):
| | |
|---|---|
| Naturkautschuk | 26% |
| Kartoffelstärke | 6% |
| Popcorn | 13% |
| Roggen | 26% |
| Polybetahydroxybutyrat | 25% |
| Zitronensäure | 4%. |

12. Werkstoff nach Anspruch 10,
gekennzeichnet durch
folgende Zusammensetzung (Gew.%):
| | |
|---|---|
| Naturkautschuk | 13% |
| Kartoffelstärke | 13% |
| Hafer | 13% |
| Roggen | 26% |
| Polybetahydroxybutyrat | 20% |
| Stearin | 3% |
| Zitronensäure | 3% |
| Gelatinepulver | 2% |
| Popcorn | 7%. |

13. Biologisch abbaubarer Werkstoff nach Anspruch 10,
gekennzeichnet durch
folgende Zusammensetzung (Gew.%):
| | |
|---|---|
| Naturkautschuk | 19% |
| Kartoffelstärke | 12% |
| Hafer | 19% |
| Popcorn | 12% |
| Dammar-Harz | 12% |
| Polybetahydroxybutyrat | 19% |
| Zitronensäure | 3% |
| Stearin | 2% |
| Gelatinepulver | 2%. |

14. Verfahren zum Herstellen eines Werkstoffes gemäß einem der Ansprüche 1-13,
gekennzeichnet durch
folgende Schritte:
a) die Ausgangsstoffe, wie Stärke, Polybetahydroxybutyrat, Füll- und Hilfsstoffe werden in zerkleinerter Form, nämlich als Pulver oder Granulat bereitgestellt;
b) der Kautschuk wird in Form von Flocken oder Granulat bereitgestellt;
c) die Ausgangsstoffe werden innig miteinander vermischt;
d) das so erhaltene Ausgangsgemisch wird unter Erhitzung einem Schneckenextruder oder einer Spritzgußmaschine plastifiziert;
e) die plastifizierte Masse wird aus dem Extruder bzw. der Spritzgußmaschine ausgestoßen und erkalten gelassen.

15. Verfahren nach Anspruch 14,
dadurch gekennzeichnet,
daß bei der Plastifizierung gemäß Schritt d) eine Temperatur von 170°C bis 180°C eingehalten wird.

16. Verfahren nach Anspruch 15,
dadurch gekennzeichnet,
daß die extrudierte Masse granuliert und als Ausgangsstoff für die Herstellung von Spritzgußformteilen verwendet wird.

## Claims

1. Biodegradable material, characterized by the following composition (% by weight):
| | |
|---|---|
| rubber | from 5 to 50% |
| starch powder | from 4 to 25% |
| polybetahydroxybutyrate | from 10 to 50% |
| auxiliaries | from 0 to 15%. |

2. Biodegradable material, characterized by the following composition (% by weight):
| | |
|---|---|
| rubber | from 5 to 50% |
| starch powder | from 4 to 25% |
| cellulose powder | from 10 to 50% |
| auxiliaries | from 0 to 15%. |

3. Biodegradable composite material having a thermoplastic matrix and, embedded therein, granular or fibrous fillers of renewable raw materials, characterized in that the matrix is composed of
| | |
|---|---|
| rubber | from 5 to 50% by weight |
| starch powder | from 4 to 25% by weight |
| polybetahydroxybutyrate | from 10 to 50% by weight |
| auxiliaries | from 0 to 15% by weight. |

4. Biodegradable composite material having a thermoplastic matrix and, embedded therein, granular or fibrous fillers of renewable raw materials, characterized in that the matrix is composed of
| | |
|---|---|
| rubber | from 5 to 50% by weight |
| starch powder | from 4 to 25% by weight |
| cellulose powder | from 10 to 50% by weight |
| auxiliaries | from 0 to 15% by weight. |

5. Biodegradable composite material having a thermoplastic matrix and, embedded therein, granular or fibrous fillers of renewable raw materials, characterized in that the matrix is composed of
| | |
|---|---|
| rubber | from 5 to 50% by weight |
| starch powder | from 4 to 25% by weight |
| mixture of polybetahydroxybutyrate and cellulose | from 10 to 50% by weight |
| auxiliaries | from 0 to 15% by weight. |

6. Material according to one of Claims 3, 4 or 5, characterized in that the content of fillers is a maximum of 65% by weight.

7. Material according to Claim 6, characterized by the following composition (% by weight):
| | |
|---|---|
| rubber | from 10 to 30% |
| potato starch | from 5 to 15% |
| polybetahydroxybutyrate and/or cellulose | from 20 to 30% |
| fillers | from 25 to 60% |
| auxiliaries | max. 10%. |

8. Material according to one of Claims 3 to 7, characterized in that the fillers are cereal seeds or plant fibres.

9. Material according to one of Claims 3 to 8, characterized in that, as fillers, granules of puffed cereal grains are present.

10. Material according to one of Claims 1 to 9, characterized in that the rubber is a natural rubber.

11. Material according to Claim 10, characterized by the following composition (% by weight):
| | |
|---|---|
| natural rubber | 26% |
| potato starch | 6% |
| popcorn | 13% |
| rye | 26% |
| polybetahydroxybutyrate | 25% |
| citric acid | 4%. |

12. Material according to Claim 10, characterized by the following composition (% by weight):
| | |
|---|---|
| natural rubber | 13% |
| potato starch | 13% |
| oats | 13% |
| rye | 26% |
| polybetahydroxybutyrate | 20% |
| stearin | 3% |
| citric acid | 3% |
| gelatin powder | 2% |
| popcorn | 7%. |

13. Biodegradable material according to Claim 10, characterized by the following composition (% by weight):
| | |
|---|---|
| natural rubber | 19% |
| potato starch | 12% |
| oats | 19% |
| popcorn | 12% |
| dammar resin | 12% |
| polybetahydroxybutyrate | 19% |
| citric acid | 3% |
| stearin | 2% |
| gelatin powder | 2%. |

14. Process for producing a material according to one of Claims 1-13, characterized by the following steps:
a) the starting materials, such as starch, polybetahydroxybutyrate, fillers and auxiliaries are prepared in comminuted form, that is to say as powder or granules;
b) the rubber is prepared in the form of flakes or granules;
c) the starting materials are mixed intimately with one another;
d) the resultant starting mixture is plasticized with heating in a screw extruder or an injection moulding machine;
e) the plasticized mass is ejected from the extruder or injection moulding machine and allowed to cool.

15. Process according to Claim 14, characterized in that during the plasticization according to step d) a temperature of from 170°C to 180°C is maintained.

16. Process according to Claim 15, characterized in that the extruded mass is granulated and is used as starting material for the production of injection-moulded components.

## Revendications

1. Matériau biodégradable, caractérisé par la composition suivante (en % en poids) :
| | |
|---|---|
| Caoutchouc | 5 à 50 % |
| Fécule blutée | 4 à 25 % |
| Poly-β-hydroxybutyrate | 10 à 50 % |
| Adjuvants | 0 à 15 % |

2. Matériau biodégradable, caractérisé par la composition suivante (en % en poids) :
| | |
|---|---|
| Caoutchouc | 5 à 50 % |
| Fécule blutée | 4 à 25 % |
| Poudre de cellulose | 10 à 50 % |
| Adjuvants | 0 à 15 % |

3. Matériau composite biodégradable avec une matrice thermoplastique et, incluses dans celle-ci, des matières de charge sous forme granulée ou fibreuse faites de matières premières à croissance postérieure, caractérisé en ce que la matrice se compose de :
| | |
|---|---|
| Caoutchouc | 5 à 50 % en poids |
| Fécule blutée | 4 à 25 % en poids |
| Poly-β-hydroxybutyrate | 10 à 50 % en poids |
| Adjuvants | 0 à 15 % en poids |

4. Matériau composite biodégradable avec une matrice thermoplastique et, incluses dans celle-ci, des matières de charge sous forme granulée ou fibreuse faites de matières premières à croissance postérieure, caractérisé en ce que la matrice se compose de :
| | |
|---|---|
| Caoutchouc | 5 à 50 % en poids |
| Fécule blutée | 4 à 25 % en poids |
| Poudre de cellulose | 10 à 50 % en poids |
| Adjuvants | 0 à 15 % en poids |

5. Matériau composite biodégradable avec une matrice thermoplastique et, incluses dans celle-ci, des matières de charge sous forme granulée ou fibreuse faites de matières premières à croissance postérieure, caractérisé en ce que la matrice se compose de :
| | |
|---|---|
| Caoutchouc | 5 à 50 % en poids |
| Fécule blutée | 4 à 25 % en poids |
| Mélange de poly-β-hydroxybutyrate et de cellulose | 10 à 50 % en poids |
| Adjuvants | 0 à 15 % en poids |

6. Matériau selon l'une des revendications 3, 4 ou 5, caractérisé en ce que la proportion de matières de charge est de 65 % en poids au maximum.

7. Matériau selon la revendication 6, caractérisé par la composition suivante (en % en poids) :
| | |
|---|---|
| Caoutchouc | 10 à 30 % |
| Amidon de pomme de terre | 5 à 15 % |
| Poly-β-hydroxybutyrate et/ou cellulose | 20 à 30 % |
| Matières de charge | 25 à 60 % |
| Adjuvants | maximum 10 % |

8. Matériau selon l'une des revendications 3 à 7, caractérisé en ce que les matières de charge sont des graines de céréales ou des fibres végétales.

9. Matériau selon l'une des revendications 3 à 8, caractérisé en ce que les matières de charge présentes sont des granulés de grains de céréales éclatées.

10. Matériau selon l'une des revendications 1 à 10, caractérisé en ce que le caoutchouc est un caoutchouc naturel.

11. Matériau selon la revendication 10, caractérisé par la composition suivante (en % en poids) :
| | |
|---|---|
| Caoutchouc naturel | 26 % |
| Amidon de pomme de terre | 6 % |
| Pop-corn | 13 % |
| Seigle | 26 % |
| Poly-β-hydroxybutyrate | 25 % |
| Acide citrique | 4 % |

12. Matériau selon la revendication 10, caractérisé par la composition suivante (en % en poids) :
| | |
|---|---|
| Caoutchouc naturel | 13 % |
| Amidon de pomme de terre | 13 % |
| Avoine | 13 % |
| Seigle | 26 % |
| Poly-β-hydroxybutyrate | 20 % |
| Stéarine | 3 % |
| Acide citrique | 3 % |
| Poudre de gélatine | 2 % |
| Pop-corn | 7 % |

13. Matériau biodégradable selon la revendication 10, caractérisé par la composition suivante (en % en poids) :
| | |
|---|---|
| Caoutchouc naturel | 19 % |
| Amidon de pomme de terre | 12 % |
| Avoine | 19 % |
| Pop-corn | 12 % |
| Résine de dammar | 12 % |
| Poly-β-hydroxybutyrate | 19 % |
| Acide citrique | 3 % |
| Stéarine | 2 % |
| Poudre de gélatine | 2 % |

14. Procédé de fabrication d'un matériau selon l'une des revendications 1 à 13, caractérisé en ce qu'il comprend les étapes consistant à :
a) approvisionner les matériaux de départ tels que l'amidon, le poly-β-hydroxybutyrate, les matières de charge et les adjuvants sous une forme concassée, à savoir sous forme de poudre ou de granulés ;
b) approvisionner le caoutchouc sous forme de flocons ou de granulés ;
c) mélanger intimement les matériaux de départ les uns avec les autres ;
d) plastifier le mélange de départ ainsi obtenu en le chauffant dans une extrudeuse à vis ou une machine d'injection sous pression ;
e) éjecter la masse plastifiée de l'extrudeuse ou de la machine d'injection sous pression et la laisser refroidir.

15. Procédé selon la revendication 14, caractérisé en ce que, lors de la plastification à l'étape d), on respecte une température de 170 °C à 180 °C.

16. Procédé selon la revendication 15, caractérisé en ce que la masse extrudée est granulée et utilisée comme matériau de départ pour la fabrication de pièces de forme moulées par injection.
